(19) Europäisches Patentamt / European Patent Office / Office européen des brevets

(11) **EP 2 405 660 A1**

(12) **EUROPEAN PATENT APPLICATION**

(43) Date of publication:
**11.01.2012 Bulletin 2012/02**

(51) Int Cl.:
*H04N 7/64* *(2006.01)*    *H04N 7/24* *(2011.01)*

(21) Application number: **10006973.1**

(22) Date of filing: **06.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Panasonic Corporation**
**Kadoma-shi**
**Osaka 571-8501 (JP)**

(72) Inventors:
• **Petrov, Mihail**
**63225 Langen (DE)**

• **Kimura, Tomohiro**
**Chuo-ku**
**Osaka 540-6207 (JP)**
• **Ouchi, Mikihiro**
**Chuo-ku**
**Osaka 540-6207 (JP)**

(74) Representative: **Grünecker, Kinkeldey,**
**Stockmair & Schwanhäusser**
**Anwaltssozietät**
**Leopoldstrasse 4**
**80802 München (DE)**

(54)    **Robust in-band signaling for a digital broadcast system**

(57)    The present invention relates to transmitting and receiving a digital broadcast service in a digital broadcast service system. In particular, the present invention relates to transmitting and receiving the in-band signaling which is a part of the data frames in such a manner that the in-band signaling is better protected with a forward error correction (FEC) coding than the payload data. This is achieved by an additional FEC coding applied separately to the in-band signaling data. After having encoded the in-band signaling data, the encoded in-band signaling data are further encoded together with the payload data with another FEC code. This results in a code rate of the coded signaling data being lower than the code rate of the payload data.

## Fig. 8

## Description

The present invention relates to the field of digital broadcast communications, and more specifically, to in-band signaling for digital broadcast systems with block forward error correction coding.

BACKGROUND OF THE INVENTION

Digital broadcast networks enable a unidirectional transmission of data such as audio, video, subtitling text, applications, etc. In broadcast networks, there is typically no return channel from the receiver to the transmitter and thus adaptive techniques cannot be employed. In general, digital video broadcast networks may carry multiple transport streams. Video streams may be encoded using, for instance, a compression standard such as MPEG-2 or MPEG-4 part 10 (H.264) and encapsulated into an MPEG transport stream. Each transport stream may carry a multiplex of digital video broadcast services, which are also called programs. Each service may be further composed of service components, which are transported in elementary streams. The broadcast service may be, for instance, a TV program, which may include one or more audio components and one or more video components. The multiple audio components may carry speech in different languages. Alternatively, the multiple audio components and the multiple video components may carry the same audio and video content respectively, but coded with different robustness levels. Instead of having independent processing for each service, it is also possible to have a finer granularity by having independent processing for the components of a service, such as the audio and video components of a program. In the following description, the terms "service" and "service component" are used interchangeably.

At present, there are several families of digital broadcast standards around the world. For instance, in Europe, Digital Video Broadcasting (DVB) standards have been adopted. In general, these standards define the physical layer and the data layer of the broadcast distribution system. The definition of the physical and data link layer depends on the transport medium, which can be, for instance, a satellite, cable, or terrestrial channel. Correspondingly, the family of DVB standards includes DVB-S and DVB-S2 for satellite transmission, DVB-C and DVB-C2 for cable transmission, DVB-T and DVB-T2 for terrestrial transmission, and DVB-H for terrestrial transmission to handheld devices. The recent terrestrial digital broadcast standard DVB-T2 is an extended version of the widely used DVB-T standard. The specifications of these two standards can be found in ETSI standard EN 302 755, "Frame Structure Channel Coding and Modulation for a Second Generation Digital Terrestrial Television Broadcasting System (DVB-T2)" and ETSI standard ETS 300 744, "Digital Broadcasting Systems for Television, Sound and Data Services: Frame Instructor, Channel Coding and Modulation for Digital Terrestrial Television" respectively. Other than the DVB-T standard, the DVB-T2 standard introduces, for instance, the concept of physical layer pipes, provides new forward error correction schemes, modulation constellations, larger OFDM symbol sizes and more pilot configurations.

In a digital broadcasting communication system the transmitted data is divided into allocation units which have typically a constant duration, referred to as data frames. Several services can be multiplexed and transmitted, for instance, on the same RF channel, which can be for instance a regular TV channel in the UHF and VHF bands.

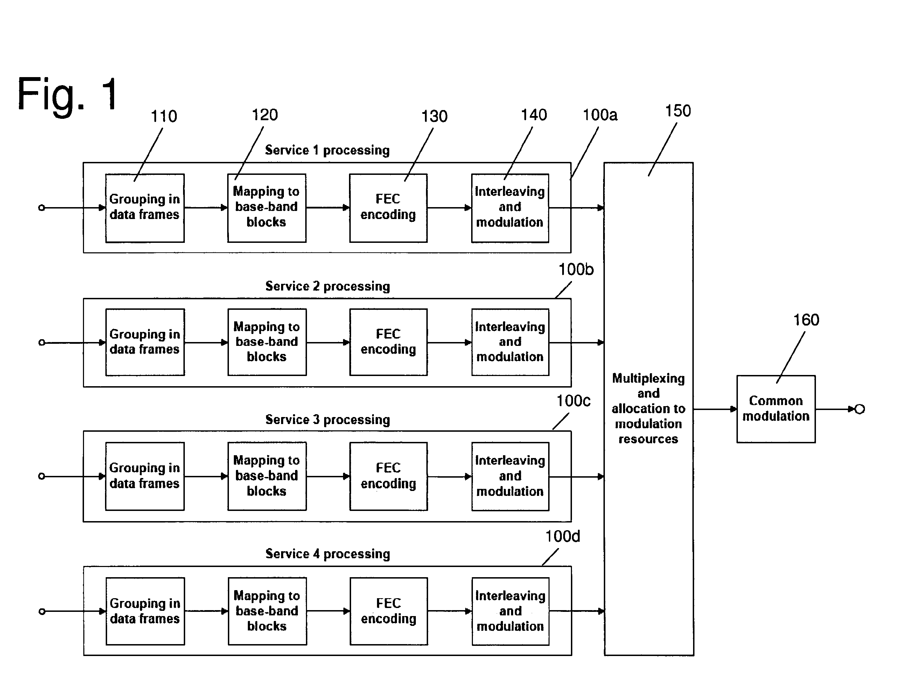

Figure 1 illustrates processing of data on the transmitter side for a plurality of services, in particular for four services. The four services are processed in parallel, which is illustrated as processing 100a, 100b, 100c and 100d. The steps of the processing are in common for each of the four services and will therefore be described in detail only for the first service 100a.

First, the data are grouped 110 in units of constant duration referred to as (base-band) data frames. Each data frame is then mapped 120 onto an integer number of fixed-size blocks, which we have referred to as base-band blocks. The base-band blocks are then encoded 130 with a Forward Error Correction Code (FEC). The FEC introduces redundancy to the data in order to make it more robust against channel impairments such as noise and fading. The redundancy enables, in particular, detecting and/or correcting some transmission errors. The FEC-encoded base-band blocks are then interleaved and modulated 140 (mapping of data on a modulation constellation). The interleaved and modulated data from different services are then multiplexed 150 and mapped onto modulation resources 160.

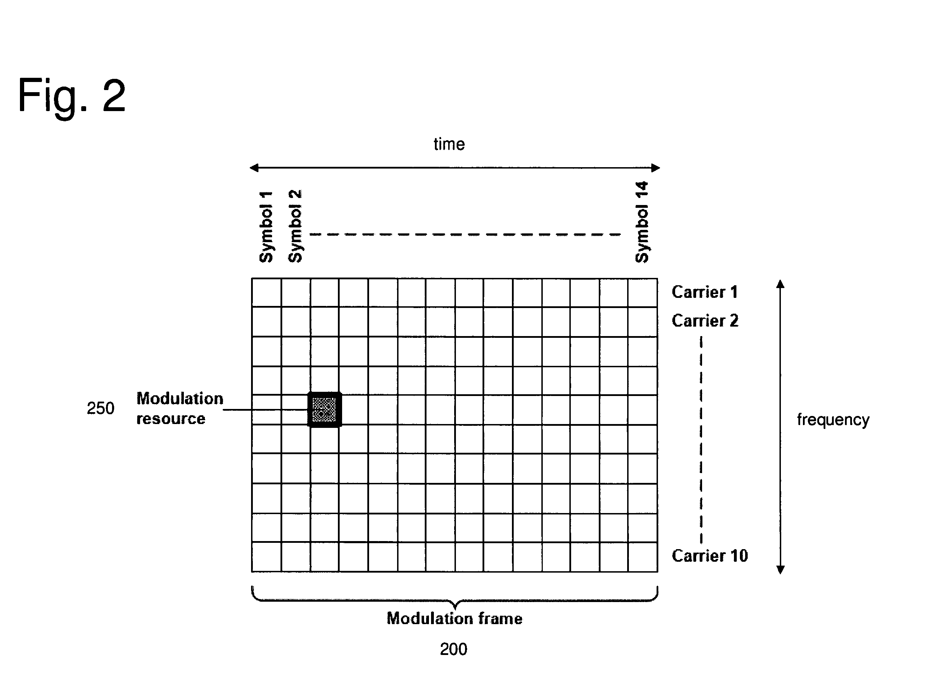

In a digital broadcast system using Orthogonal Frequency Division Multiplex (OFDM) modulation, the modulation resources are the OFDM sub-carriers and symbols. This is exemplified in Figure 2 for 10 carriers and 14 symbols in time domain. In particular, Figure. 2 illustrates a modulation frame 200 which spans in a time domain and in a frequency domain. The time domain of the modulation frame is subdivided into fourteen OFDM symbols, whereas the frequency domain of the modulation frame 200 is subdivided into ten OFDM subcarriers. One modulation resource 250 is then defined by its position within the time and frequency domain, i.e by the index of the OFDM symbol and the index of the OFDM subcarrier.

In addition to the payload data, the (base-band) data frames may also contain signaling information for the receiver. An example of such information is the allocation of the modulation resources 250 to the various services. The allocation is signaled since it may change from frame to frame due to the fact that the services typically have variable data rate.

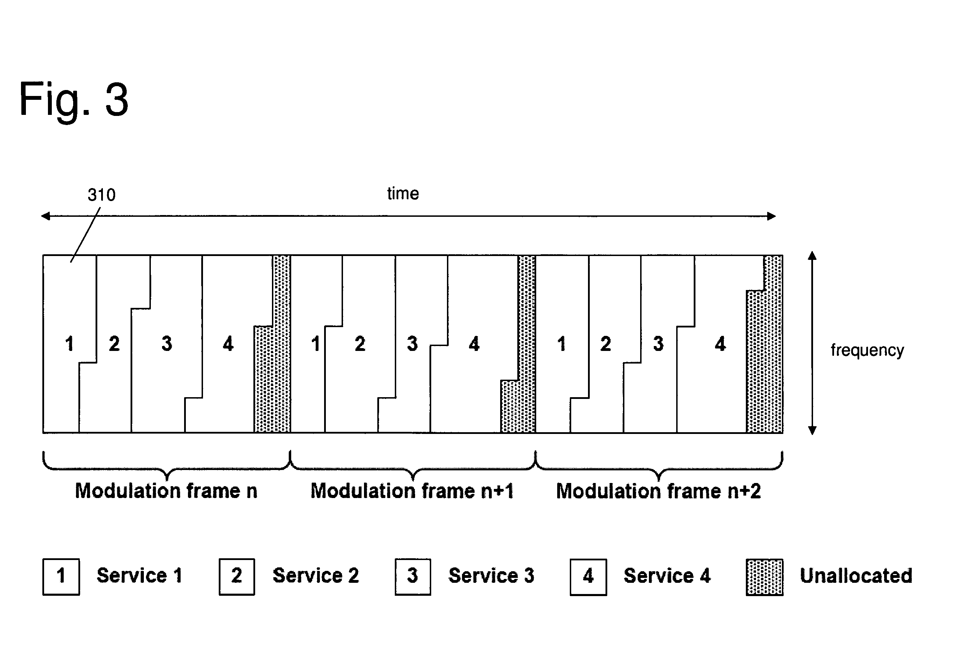

An example of a variable allocation of the modulation resources is shown in Figure 3 for illustrative purposes for the case of four services. In this example one data frame 310 is mapped to one modulation frame (n-th modulation frame in this example) for each service. In particular, three modulation frames n, n+1, and n+2 are illustrated, spanning the time and frequency domain. Four services are mapped on each of these three modulation frames in such a manner that a data frame of each service is mapped on a single modulation frame. For instance, modulation frame n carries a data frame 310 of the first service, a data frame of a second service, a data frame of the third service, a data frame of the fourth service, and a remaining unallocated portion of resources. In this example, the data frames of a particular service mapped on different modulation frames have different sizes.

However, it is also possible to map one data frame to more than one modulation frame. Also, a data frame is not necessarily mapped to consecutive modulation frames.

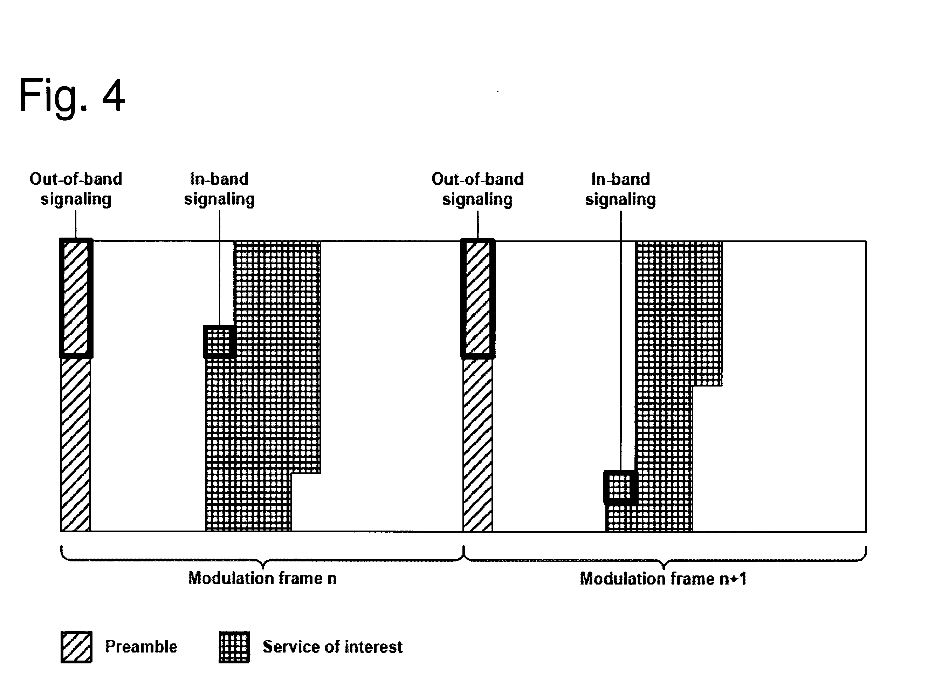

The signaling that is carried in the data frames is referred to as in-band signaling, meaning that the signaling is transmitted using the same means as the payload data, which is the data frames in this case. A complementary signaling type, whereby signaling data pertaining to a service is sent using other means, is referred to as out-of-band signaling. Figure 4 shows an example of in-band and out-of-band signaling. The out-of-band signaling is typically transmitted in the beginning of each modulation frame (called preamble) and signals the allocation for all services carried in the current modulation frame. The in-band signaling signals the allocation information for the current services and optionally for other services. The allocation information refers to one or more future modulation frames onto which the signaled services are mapped. In particular, Figure 4 shows, with a diagonal hatching, the portion of the modulation frame n and n+1 called preamble. The preamble carries inter alia the out-of-band signaling marked as a black rectangle within the diagonally hatched preamble. The remaining part of a modulation frame carries a data frame or its part of a particular service. This is illustrated by a vertically and horizontally hatched region. Within the service (program) data, the in-band signaling may be transported, which is illustrated in the figure as a black square within the vertically and horizontally hatched region of the particular service.

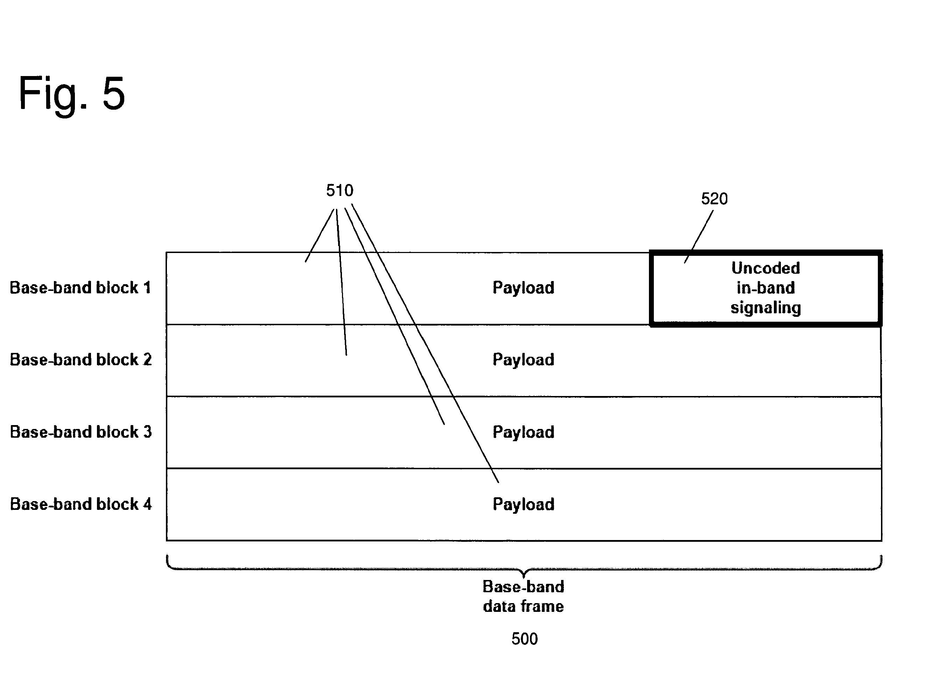

For instance, in the DVB-T2 terrestrial digital TV standard, the in-band allocation signaling is sent in the same way as the payload data using simple multiplexing. Therefore, the robustness of the in-band signaling information will be identical to that of the payload data. This is illustrated in Figure 5 for a data frame 500 consisting of four base-band blocks (illustrated as the four rows of the data frame 500), where the in-band signaling 520 is mapped to the end of the first base-band block. The remaining data of the data frame is payload data 510. However, the data frame may alternatively also carry padding, if necessary.

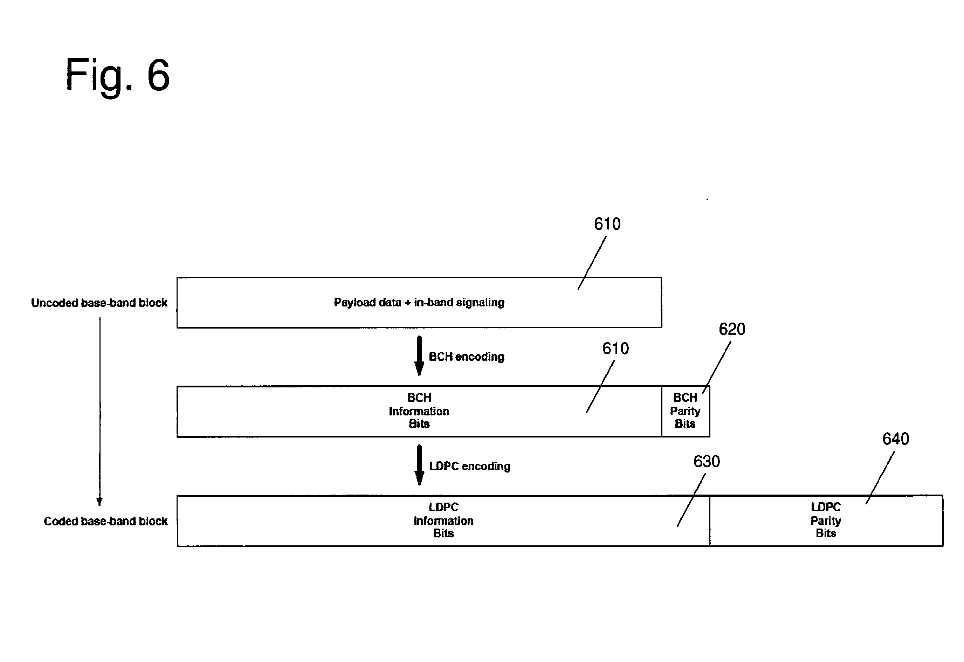

After the payload data 510 and the in-band signaling data 520 are mapped to the base-band blocks, the latter undergo in DVB-T2 two concatenated FEC encoding steps, as shown in Figure 6:

1) Encoding with a Bose-Chaudhuri-Hocquenghem-Codes (BCH) code

2) Encoding with a Low Density Parity Check (LDPC) code

The BCH code typically has a very high code rate which means that the BCH code adds only a few redundancy bits to the data to be coded. The LDPC code typically has a much lower code rate than the BCH code and thus adds more redundancy bits to the data already encoded by the BCH coding. The purpose of the BCH code is mainly removing the error floor which may appear after the LDPC decoding in certain configurations, rather than increasing the robustness of the FEC coding scheme. The actual error correction is mainly facilitated by the LDPC code. Both the BCH and the LDPC code are block codes, meaning that they operate on a finite block of data and both are systematic, which means that each of these codes appends parity bits to the block of input data (information block) leaving the input data unchanged.

This is schematically illustrated in Figure 6. In particular, a base-band block 610 is subjected to a BCH encoding resulting in a BCH encoded block including the BCH information bits which are the same as the uncoded base-band block bits 610 and the BCH parity bits 620. The BCH encoded block is then subjected to a further encoding with an LDPC code. The BCH encoded block forms the LDPC information bits 630 to which LDPC parity bits 640 are added.

SUMMARY OF THE INVENTION

Based on the above description it may be observed that the in-band signaling and the payload data are handled by the forward error correction coding in the same way. This means that both payload data and in-band signaling data are encoded with the same robustness.

However, the in-band signaling carries important information essential for correct decoding of data from the following modulation frames. If the in-band signaling is corrupted, the demapping of the data frames from the modulation resources, as well as the subsequent decoding of the data, will fail.

In view of the above problem, the aim of the present invention is to improve the efficiency of the reception of digital broadcast data.

This is achieved by the features as set forth in the independent claims.

Preferred embodiments of the present invention are the subject matter of the dependent claims.

It is the particular approach of the present invention to encode the signaling data with a dedicated forward error code and then to encode both the already encoded signaling data and the payload data with another common forward error correcting code.

Such a cascaded two-step encoding of the signaling data provides higher robustness and thus enables to reliably decode the signaling information necessary for the receiver in order to receive and decode the payload correctly.

In accordance with a first aspect of the present invention, a receiver for receiving a digital broadcast service is provided. Such a receiver comprises a receiving unit configured to receive an encoded data frame including encoded signaling data and encoded payload data.. The signaling data is encoded with a lower code rate than the payload data in order to enable a more reliable decoding. The receiver further comprises a data-frame decoding unit for decoding the received encoded signaling data and the received encoded payload data with a first forward error correction code as well as a signaling decoding unit for decoding said decoded signaling data with a second forward error correction code. The receiving unit is further configured to receive encoded frame(s) following the received data framein accordance with said signaling data decoded by the signaling decoding unit. The decoded signaling data and the decoded payload data form a data frame.

In particular, the receiving unit may be configured to receive at least one modulation frame and to demap from the at least one modulation frame encoded data blocks containing signaling data and encoded payload data. The receiving unit may be further configured to receive modulation frame(s) following the received at least one modulation frame in accordance with said signaling data decoded by the signaling decoding unit.

In accordance with another aspect of the present invention, a transmitter for transmitting a digital broadcast service is provided. Such a transmitter comprises a signaling encoding unit for encoding a signaling data of a data frame with a second forward error correction code as well as a data-frame encoding unit for encoding the already encoded signaling data and payload data of said data frame, with a first forward error correction code. The transmitter further comprises a transmitting unit transmitting the encoded data frame. The signaling data includes information for receiving data frames following said transmitted data frame. The signaling data is encoded with a lower code rate than the payload data.

In particular, the transmitting unit may be configured to map said encoded payload data and said encoded signaling data on at least one modulation frame and for transmitting the at least one modulation frame. The signaling data includes information for demapping modulation frames following said at least one transmitted modulation frame.

In particular, the digital broadcast service may be any audio, video, text, or application service broadcast over a digital broadcasting network. An example of such a network is, for instance, a network compliant with any of the DVB standards. The modulation frames are received and transmitted over a channel, which may be any channel such as radio, satellite, or terrestrial channel.

The data frame includes in-band signaling data and payload data. In addition, the data frame may also include padding. The payload data is, for instance the data mapped from the transport stream carrying a particular service. The in-band signaling data may include, for instance, allocation of the modulation frame resources to data of a particular service and/or data frame. In this way, the digital broadcast network may efficiently utilize its resources by adapting the channel allocation to the current data rate of the service. The data rate of a service may considerably vary in time.

Preferably, the second error correction code is a convolutional, a turbo code, or an LDPC code, since they provide a good decoding performance. However, the present invention is not limited to such codes and, in general, the second FEC code may be also any kind of a block code such as a Reed-Solomon code, BCH code, etc.

For the purpose of the present invention, preferably, the first, the second and the third FEC codes are different codes. However, the FEC codes may be codes of the same type. For instance, the second code can be the same as the first code, e.g. an LDPC code. The present invention is, in general, not limited by the particular FEC code types and codes applied as the first, the second and/or the third FEC code. The first FEC code is common to the payload data and to the signaling data. The second FEC code is only for encoding the (in-band) signaling data and has preferably a rather low code rate such as a code rate of 1/2 or less. This is for increasing the reliability of signaling data decoding. However, the present invention is not limited thereto. In general, the signaling data is to be better protected with the overall FEC coding (including all coding steps) than the payload data. The second FEC code for coding signaling data may also have a code rate higher than 1/2. Preferably, the signaling decoding unit of the receiver is adapted to perform soft-input decoding. Soft-input decoding typically increases the reliability of the decoded signal for the same channel quality.

In accordance with an embodiment of the present invention, the payload data is also encoded, namely with a third FEC code, before being encoded with the first FEC code together with the encoded in-band signaling data. The third FEC code has a higher code rate than the second FEC code. Its main purpose is not so much to improve the robustness of the payload data but rather to remove any error floor remaining after decoding the first FEC code in the receiver.

In accordance with still another aspect of the present invention, a method for receiving a digital broadcast service is provided. The method comprises the step of receiving an encoded data frame including encoded signaling data and encoded payload data. The signaling data is encoded with a lower code rate than the payload data. The method further comprises decoding both the received signaling data and the received payload data with a first forward error correction code. After this first decoding step, the signaling data decoded with the first forward error correction code is further decoded with a second forward error correction code. In accordance with said signaling data decoded with the second forward error correction code the reception of data frames following the received data frame is performed. The decoded payload and the decoded signaling data form a data frame.

In accordance with yet another aspect of the present invention, a method for transmitting a digital broadcast service is provided. The method comprises the step of encoding with a second forward error correction code signaling data being a part of a data frame. Moreover, the method includes the step of encoding with a first forward error correction code the signaling data, already encoded with said second forward error correction code, as well as payload data which are also a part of said data frame. Both the encoded payload data and the encoded signaling data forming encoded data frame are transmitted. The signaling data includes information for receiving the data frames following said transmitted data frame. The signaling data are encoded with a lower code rate than the payload data.

In accordance with another aspect of the present invention, a computer program product comprising a computer-readable medium having a computer-readable program code embodied thereon is provided, the program code being adapted to carry out the present invention.

In accordance with still another aspect of the present invention, a system for transferring digital broadcast data from a transmitting side to a receiving side is provided, comprising a transmitting apparatus as described above, a broadcast channel and a receiving apparatus as described above. The broadcast channel may be formed by any media such as cable, satellite channel, terrestrial wireless channel, etc. The receiving apparatus may be a digital television, a set top box, a personal computer or a portable computer equipped with a digital broadcast receiver, a handheld device or any other device.

The above objectives and other objectives and features of the present invention will become more apparent from the following description and preferred embodiments, given in conjunction with the accompanying drawings in which:

Figure 1 is a block diagram illustrating an example of physical layer processing of four services in a digital broadcast system;

Figure 2 is a schematic drawing illustrating an example of a grid of OFDM modulation resources in time and frequency domain;

Figure 3 is a schematic drawing illustrating mapping of data frames of four services onto modulation frames in a digital broadcasting system;

Figure 4 is a schematic drawing illustrating modulation frames carrying both out-of-band signaling and in-band signaling;

Figure 5 is a schematic drawing illustrating the format of the (base-band) data frame carrying uncoded in-band signaling;

Figure 6 is a schematic drawing illustrating two a step forward error correction coding of a base-band block in a digital broadcasting system;

Figure 7 is a schematic drawing illustrating the format of a base-band data frame including coded in-band signaling in accordance with the present invention;

Figure 8 is a schematic drawing illustrating a two step approach of forward error correction coding of a base-band block in accordance with the present invention;

Figure 9 is a schematic drawing illustrating an example BER over SNR curves for inband signaling of the prior art, in-band signaling according to the present invention and out-of-band signaling;

Figure 10A is a block diagram illustrating the encoder in accordance with the present invention;

Figure 10B is a block diagram illustrating the decoder in accordance with the present invention;

Figure 11 A is a flow chart illustrating the steps of an encoding method in accordance with the present invention; and

Figure 11 B is a flow chart illustrating the steps of a decoding method in accordance with the present invention; and

Figure 12 is a schematic drawing illustrating an example of a digital broadcast system for applying the present invention.

DETAILED DESCRIPTION

The problem underlying the present invention is based on the observation that the in-band signaling information is more critical than the payload data. In order to increase the efficiency of a transmission of data in a digital broadcasting system, the present invention improves the robustness of the in-band signaling. This is achieved by an extra encoding of the in-band signaling data with an additional forward error correction (FEC) code which is not applied to the payload data.

A code rate of a forward error correction code is defined as a ratio of the useful information to the useful information plus the redundancy added by the forward error correction code. In particular, for a forward error correction code which encodes k information bits by adding n-k parity bits resulting in the entire number of bits n, the code rate is defined as

$$R = k / n.$$

The smaller the code rate R, the lower the amount of useful data within the FEC-coded data. In other words, smaller code rate means that the FEC code adds a higher number of redundancy bits to the information (user) data.

Preferably, the code rate of the additional FEC code is low in order to ensure a significantly improved error correcting capability. Here, low code rate may mean equal to or less than 1/2. Preferably, the additional FEC code is a code that allows for soft bits at the input of the decoder, such as a convolutional code, a Turbo code, or an LDPC code. In particular, employing convolutional codes, turbo codes, or LDPC codes enables performing of a soft-input decoding at the decoder, i.e. inputting soft bits (probability levels) at the input of the decoder. For a given code rate, such a code offers typically a better robustness than a code for which the decoder only accepts hard bits, such as BCH or Reed-Solomon codes.

Specifically, the in-band signaling contains the allocation information for the current service. The in-band signaling may also include allocation information for other services. Here, the allocation information may be, for instance, the position of modulation resources within the upcoming modulation frames in which data frame(s) of a particular service are to be carried.

In the DVB-T2 standard, the in-band signaling is typically transmitted in the first base-band block of a data frame. However, the present invention is not limited thereto and the in-band signaling may be transmitted within any one or more base-band block(s) of a data frame, which means at any position within the data frame. The present invention is also not limited by the framing structure of the DVB-T2 standard and may be employed in any digital broadcast system which supports transmitting of in-band signaling used for decoding of the following modulation frames.

However, in accordance with an embodiment of the present invention, the digital broadcast service is a DVB-T2 digital broadcast service transported over a DVB-T2 network. In particular, the data frames are the base-band data frames. Each base-band data frame comprises one or more (an integer number of) base-band blocks. Each base-band block may further comprise payload, in-band signaling, or padding data. A base-band block is then encoded with a forward error correcting code in more steps. In accordance with the present invention, the in-band signaling is first encoded with an additional FEC code called a second FEC code. The payload may be encoded with the third FEC code, but may also be left uncoded at this first FEC coding stage. On the second stage, the already encoded in-band signaling and the payload data (encoded or uncoded) are encoded with a common first FEC code. The coded data of the base-band blocks of a data frame are then mapped onto modulation frame(s) and processed as shown, for instance, in Figure 1.

The modulation resources are, in general, any time, frequency, or code resources. For the example of the DVB-T2 system, the modulation resources are, for instance, the particular OFDM symbols and sub-carriers allocated for the transmission of the given service and, more specifically, the particular data frame of the service. The in-band signaling may include allocation information regarding the same service as the service in the data frame of which the in-band signaling is carried. However, the in-band signaling may also include allocation information regarding other services mapped on different data frames.

In this embodiment of the present invention, the first FEC code may be an LDPC code and the third FEC code may be a BCH code as specified in DVB-T2. The LDPC code is applied to both the signaling data and the payload data. In order to protect the signaling data better than the payload data, the second FEC code is applied in this embodiment to the signaling data before their encoding with the LDPC code. The second FEC code has a code rate lower than the BCH code so as to provide higher reliability of the signaling data.

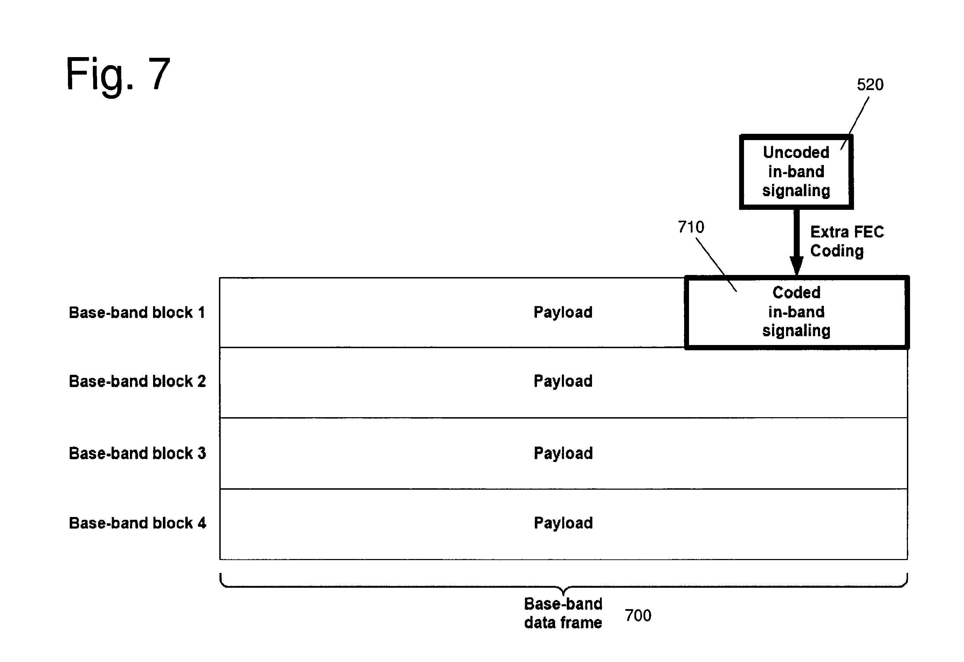

Figure 7 illustrates a mapping of a payload and the in-band signaling onto the base-band blocks of a data frame 700 in accordance with an embodiment of the present invention. In particular, the in-band signaling is mapped at the end of the first base-band block of the data frame. However, this is only an example and the in-band signaling may be mapped in any place within the data frame. Figure 7 differs from Figure 5 in particular by the additional forward error correction coding of the uncoded in-band signaling 520. The uncoded in-band signaling 520 is coded, and the coded in-band signaling 710 is then inserted into a predetermined position within the (base-band) data frame 700. The entire base-band data frame 700 is then further encoded by another forward error correction code in order to increase robustness of both the signaling and the payload data.

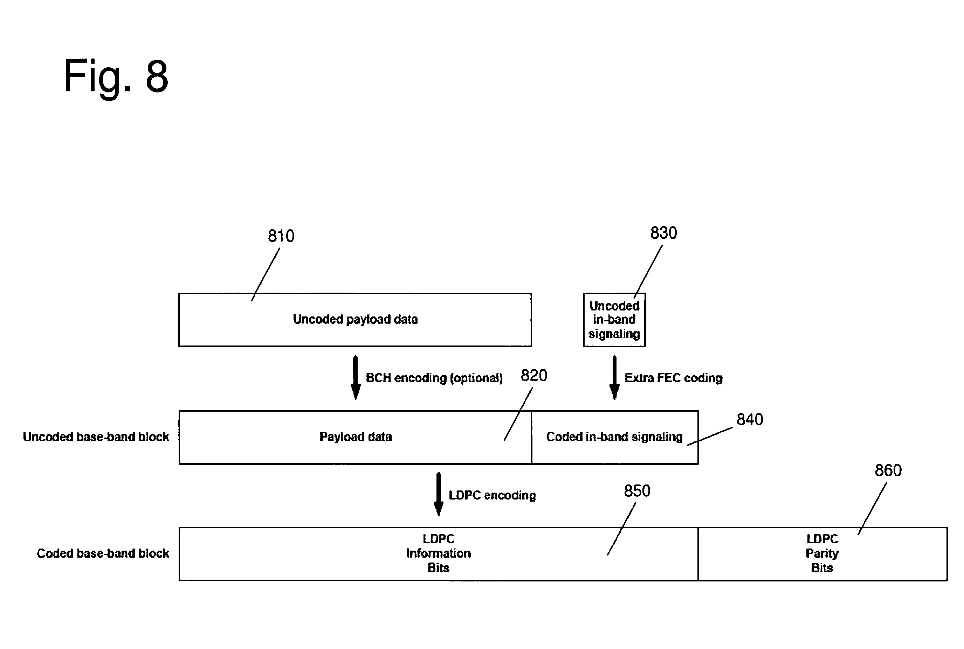

Figure 8 illustrates this in more detail and emphasizes the cascaded forward error correction coding for the in-band signaling. In particular, the uncoded in-band signaling 830 is encoded with a second forward error correction code, resulting in coded in-band signaling 840. The uncoded payload data 810 may be encoded by a BCH encoding resulting in coded payload data 820. However, in general, the BCH encoding of the payload data may be omitted and the payload data 810 and 820 may be the same. The possibly encoded payload data 820 and the coded in-band signaling 840 then undergo an LDPC encoding and result in LDPC information bits 850 and LDPC parity bits 860. Since the LDPC code is systematic, the LDPC information bits 850 are directly the payload data 820 and the coded in-band signaling 840.

The payload data may in general be protected by a forward error correction code different from the BCH code. However, since the in-band signaling is more crucial for decoding of the following frames, the forward error correction code used for encoding the in-band signaling should have a lower code rate than the code of the forward error correction code used for encoding the payload data.

Alternatively to the in-band signaling, the allocation information could also be transmitted in dedicated blocks as out-of-band information. However, since the number of bits to be signaled is typically low, for instance, 100-500 bits, the resulting block length would be relatively short. Due to the short block length, the applied FEC coding is less efficient. The in-band signaling takes advantage of the large block size of the first FEC code, which is applied to both signaling and payload. In the out-of-band signaling case the block length is relatively short because only the signaling data is encoded and transmitted. This results in a dependency of Bit Error Rate (BER) over Signal to Noise Ratio (SNR) with a rather gentle slope, although the error correcting effects can already start at very low SNR values if the code rate is sufficiently low. The base-band blocks with a much higher length typically also have a much steeper slope of dependency of BER over SNR.

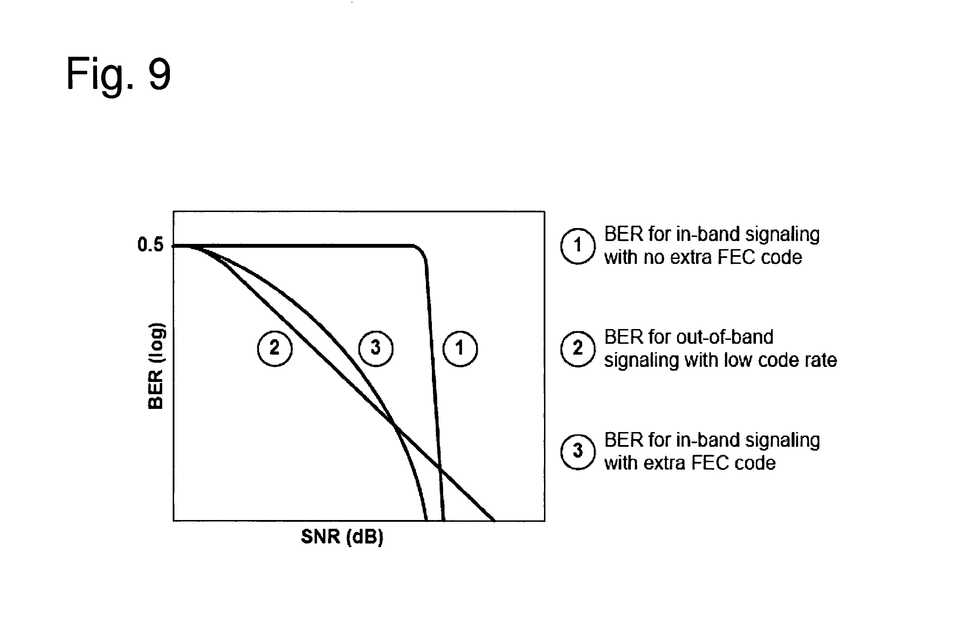

Figure 9 illustrates an example of typical BER curves for the above discussed cases. In particular, curve 2 shows the efficiency of the out-of-band signaling with rather short-blocks and employing a low code-rate FEC. It can be seen that the error correcting starts early but the BER curve has a rather gentle slope, descending slowly. Curve 1 shows the efficiency of the in-band signaling with a longer FEC block. As can be seen, the effect of the error correcting is visible later but the BER curve then has a much steeper slope than the curve 2.

At low SNR values the out-of-band signaling outperforms the in-band signaling because of its lower code rate. At higher SNR values, however, the BER gap between the two is reduced because of the difference in BER slopes. Beyond a certain SNR value, the in-band signaling can even outperform the out-of-band signaling, despite the lower code rate of the latter.

By applying the idea of the present invention, i.e. protecting the in-band signaling with an additional FEC code, the resulting BER curve of the in-band signaling may always be better than that of the payload data as illustrated by curve 3.

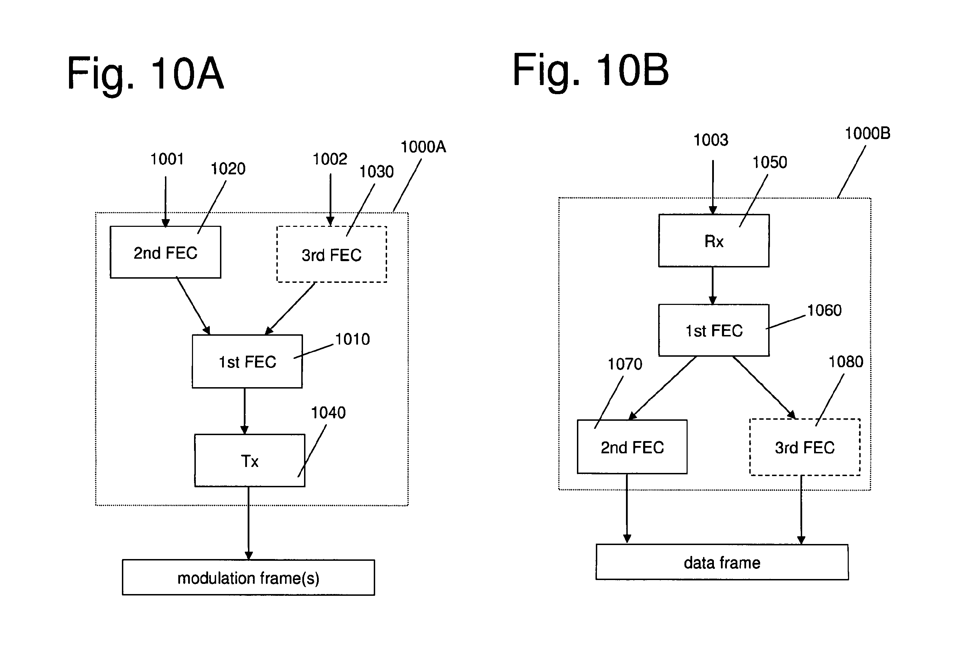

Figure 10A illustrates a transmitter 1000A of a digital broadcasting signal in accordance with the present invention. The signaling data 1001 enter the signaling encoding unit 1020, which is configured to encode the signaling data of the data frame with a second forward error correction code. The second forward error correction code may be, for instance, a convolutional code, a Turbo code, or an LDPC code, preferably with a low code rate, for instance, one half or lower. Employing of convolutional, LDPC or Turbo codes provides the advantage of a high quality decoding using soft inputs, in which the probabilities of the decoded bits are internally used. More information about convolutional, LDPC, and Turbo decoding, as well as general soft-input decoding may be found, for instance, in Book titled "Error Control Coding" (2nd Edition) by Shu Lin et al., Prentice Hall, 2004.

However, the present invention is not limited thereto and in general, the in-band signaling data may also be encoded by another code. In accordance with the present invention, the overall code rate of the coded in-band signaling data is lower than the overall code rate of the coded payload data. In this context, the overall code rate means the code rate after encoding the payload data and the signaling data in all steps of the forward error correction coding.

The payload data of the data frame enters possibly a payload encoding unit 1030. In the payload encoding unit 1030, the payload data is encoded with a third forward error correcting code. The third forward error correcting code may be, for instance, a BCH code or any other code with a code rate lower than the second forward error correction code. The coded signaling data and the coded payload data are then provided to a data frame encoding unit 1010. It should be noted that the payload data 1002 is not necessarily encoded with the payload encoding unit 1030. Rather, the payload data 1002 may be directly passed to the data frame encoding unit 1010. The data frame encoding unit 1010 encodes the coded signaling data and the coded or uncoded payload data with a first forward error correction code. The first forward error correction code may be, for instance, a block code such as an LDPC code or any other code. The data frame encoded in such a manner, namely in two steps including an additional forward error correction coding of the signaling data is then mapped on a plurality of or a single modulation frame in a transmitting unit 1040 and transmitted.

Figure 10B illustrates a corresponding receiver 1000B according to the present invention. An at least one modulation frame 1003 enters receiving unit 1050, in which the modulation frame (s) is demapped to encoded payload data and signaling data, which are later to form a data frame. The demapped payload data and signaling data are then passed to a data frame decoding unit 1060, which decodes the payload and the signaling data with a first forward error correction code. The forward error correction code, correspondingly to the transmitter, described with reference to Figure 10A, may be, for instance, an LDPC code or any other forward error correction code. The decoded signaling and payload data are then passed from the data frame decoding unit 1060 separately. In particular, the decoded signaling data is passed to signaling data decoder 1070, in which it is decoded with a second forward error correction code in order to provide a better robustness of the signaling data than the payload data. The payload data is passed from the data frame decoding unit 1060 to payload decoding unit 1080, in which it is further decoded by a third forward error correction code. It should be noted that the payload data is not necessarily encoded with the third forward error correcting code. After the first forward error correction decoding 1060, it may be directly passed to the output. The output decoded signaling data and payload data are then combined to form a data frame. The second forward error correction code may be similar as for the transmitter side, for instance a convolutional code or a Turbo code, or another LDPC code. These codes provide the possibility of employing a soft-input decoding 1070, which results in better efficiency in terms of bit error rate per channel quality. The third forward error correction code may be, for instance, a BCH code or any other code with a code rate lower than the code rate of the second forward error correcting code.

In general, in accordance with the present invention, the signaling data are encoded by at least two successive forward error correction codes in order to better protect them against any possible channel impairments. The payload data may be encoded by a single forward error correcting code which is the same as a first forward error correcting code for encoding the signaling data. Alternatively, the payload data may also be encoded in two steps with two different forward error correcting codes, wherein the second forward error correcting code has a code rate lower than the forward error correcting code used for coding the signaling data.

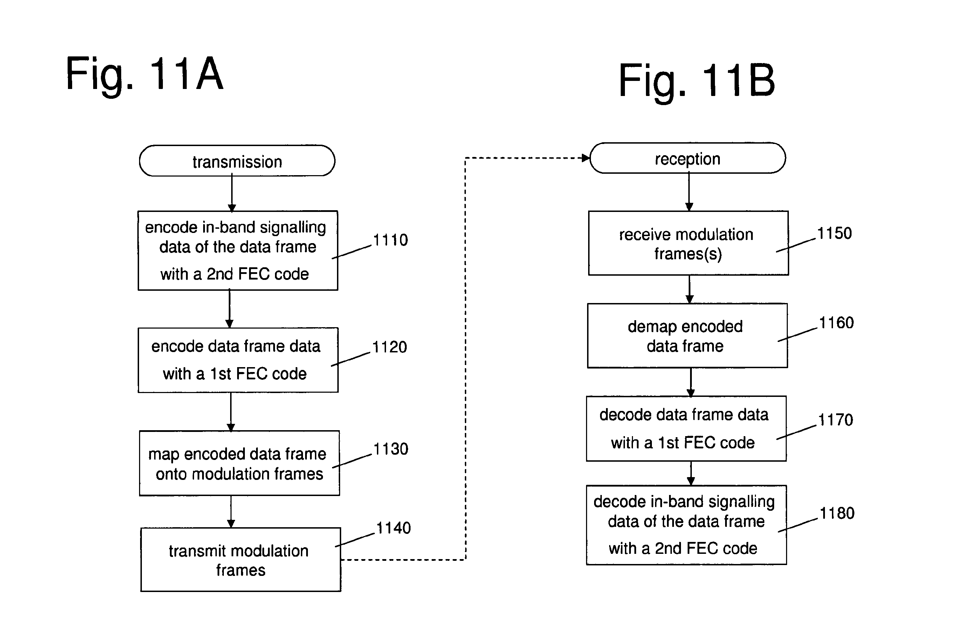

Figure 11A illustrates a method for transmitting a digital broadcast service in accordance with the present invention. The data frame data includes an in-band signaling and a payload data. In the first step 1010, the in-band signaling part of the data frame is encoded with a second forward error correcting code. The encoded in-band signaling data is then passed together with the payload data to step 1020, in which the payload data and the encoded signaling data are encoded together with a first forward error correcting code. In addition, the payload data may also be encoded before encoding with the first forward error correcting code. However, the code rate of encoding the signaling data is lower than the code rate of encoded payload data, resulting in more redundancy being added to the signaling data, in order to provide a higher reliability therefor. The encoded signaling data and payload data are then mapped 1030 onto modulation blocks. The mapping of the data frame may be performed either on a plurality of modulation blocks or onto a single modulation block. The mapped modulation blocks are then transmitted 1040.

Figure 11B shows a method for receiving a digital broadcast signal. Modulation frames are first received 1050 and the received modulation frames or a single modulation frame are demapped in order to obtain an encoded data frame 1060. The data frame data are then decoded with a first forward error correction code 1070. The data frame data includes payload data and signaling data. After the first decoding 1070, the in-band signaling data is in addition decoded with a second forward error correcting code. The decoded in-band signaling and the payload data constitute a data frame. Similarly to the transmission method, if a third forward error correcting code is applied to the payload data, the payload data would also be decoded with the third forward error correcting code after they have already been decoded with the first forward error correcting code 1070.

More specifically, the proposed scheme in context of the DVB-T2 would comprise the following steps performed at the transmitter:

　　1) Encoding the in-band signaling with a dedicated FEC code and map the resulting code block to the desired base-band block. The exact location within the base-band block is not essential for the present invention. There may be even more base-band blocks to which in-band signaling is mapped in a single base-band frame.

　　2) Filling the remaining bits of the base-band block with payload data. The payload data may be protected with an additional BCH code, like in DVB-T2, or with another FEC code.

　　3) Encoding the base-band block including both the payload and the signaling with the main FEC code, for instance, LDPC.

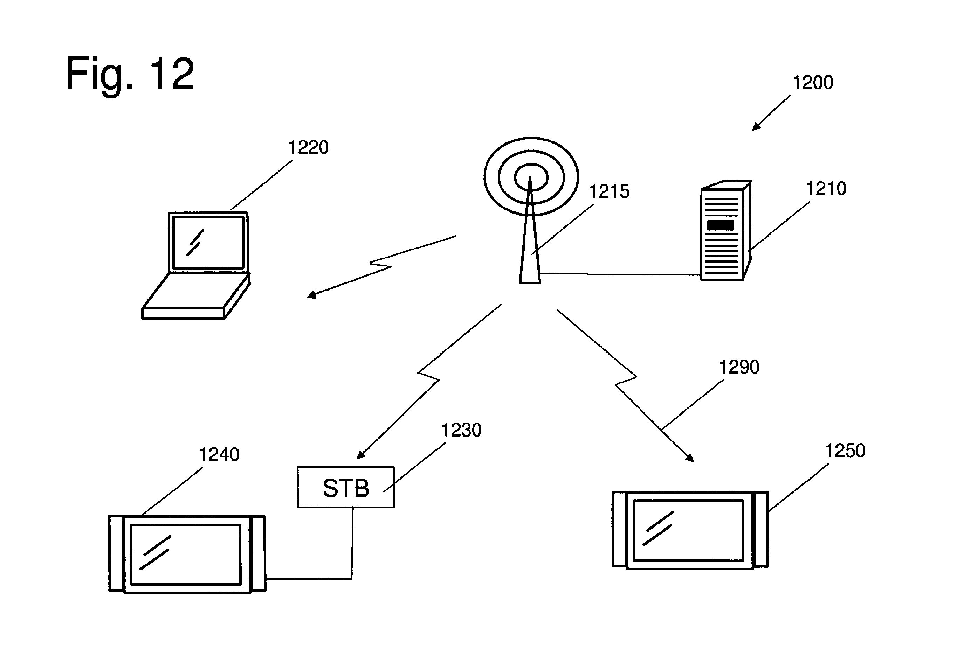

Figure 12 shows an example of a digital broadcast system in which the present invention may be applied. A transmitting apparatus 1210 may implement the transport stream packet header compression of the present invention as described above, for instance, with reference to Figure 10A. The transmitting apparatus 1210 may be a single device or a plurality of interconnected devices. The transmitter 1215 transmits the broadcast signal formed by the transmitting apparatus 1210. In this example, a terrestrial digital broadcast system is illustrated. However, the present invention is not limited thereto and may also be applied to a satellite or a cable transmission, or to a digital broadcast transmission over any other media. The receiving apparatuses illustrated in Figure 12 are a computer such as a portable or a personal computer 1230. It may, however, also be a handheld device or a mobile telephone capable of receiving the digital broadcast. Other examples of receiving apparatuses are a set top box 1240 connected to a digital or analog TV 1250 or a digital TV 1260 with integrated broadcast receiver. These examples of receiving devices and other receiving devices capable of receiving digital broadcast may implement the header decompression according to the present invention as described above, for instance, with reference to Figure 10B.

Another embodiment of the invention relates to the implementation of the above described various embodiments using hardware and software. It is recognized that the various embodiments of the invention may be implemented or performed using computing devices (processors). A computing device or processor may, for example, be general-purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example, RAM, EPROM, EEPROM, flash memory, registers, hard disks, CD-ROM, DVD, etc.

Most of the examples have been outlined in relation to a DVB-T based digital broadcasting system, and the terminology mainly relates to the DVB terminology. However, this terminology and the description of the various embodiments with respect to DVB-T based broadcasting is not intended to limit the principles and ideas of the invention to such systems. Also the detailed explanations of the encoding and decoding in compliance with the DVB-T2 standard are intended for a better understanding of the exemplary embodiments described herein and should not be understood as limiting the invention to the described specific implementations of processes and functions in the digital broadcasting. Nevertheless, the improvements proposed herein may be readily applied in the broadcasting systems described. Furthermore the concept of the invention may be also readily used in the enhancements of DVB-T2 coding currently discussed in standardization.

Summarizing, the present invention relates to transmitting and receiving a digital broadcast service in a digital broadcast service system. In particular, the present invention relates to transmitting and receiving the in-band signaling which is a part of the data frames in such a manner that the in-band signaling is better protected with a forward error correction (FEC) coding than the payload data. This is achieved by an additional FEC coding applied separately to the in-band signaling data. After having encoded the in-band signaling data, the encoded in-band signaling data are further encoded together with the payload data with another FEC code. This results in a code rate of the coded signaling data being lower than the code rate of the payload data.

**Claims**

1. An apparatus for receiving a digital broadcast service, the apparatus comprising:

   a receiving unit (1050) for receiving an encoded data frame including encoded signaling data and encoded payload data, wherein the signaling data is encoded with a lower code rate than the payload data;
   a data-frame decoding unit (1060) for decoding the received signaling data and the received payload data with a first forward error correction code;
   a signaling decoding unit (1070) for decoding the signaling data, decoded with the data-frame decoding unit, with a second forward error correction code; and
   said receiving unit (1050) being configured to receive encoded data frames following said received encoded data frame (1003) in accordance with said signaling data decoded by the signaling decoding unit.

2. The apparatus according to claim 1 wherein the signaling decoding unit (1070) is adapted to perform soft-input decoding.

3. The apparatus according to claim 1 or 2 further comprising a payload decoding unit (1080) for decoding the payload data with a third forward error correction code, wherein the third forward error correction code has a higher code rate than the second forward error correction code.

4. An apparatus for transmitting a digital broadcast service, the apparatus comprising:

   a signaling encoding unit (1020) for encoding a signaling data (1001) of a data frame with a second forward error correction code;
   a data-frame encoding unit (1010) for encoding the signaling data, encoded with said second forward error correction code, and payload data of said data frame, with a first forward error correction code;
   a transmitting unit (1040) for transmitting the encoded data frame, wherein the signaling data (1001) includes information for receiving data frames following said transmitted data frame, the signaling data being encoded with a lower code rate than the payload data.

5. The apparatus according to claim 4 further comprising a payload encoding unit (1030) for encoding the payload data (1002) with a third forward error correction code, wherein the third forward error correction code has a higher code rate than the second forward error correction code.

6. The apparatus according to any of claims 1 to 5, wherein the second error correction code is a convolutional, LDPC, or a turbo code.

7. The apparatus according to any of claims 1 to 6, wherein the code date of the second error correction code is equal to or less than 1/2.

8. A method for receiving a digital broadcast service, the method comprising the steps of:

   receiving (1150) an encoded data frame including encoded signaling data and encoded payload data, wherein the signaling data is encoded with a lower code rate than the payload data;
   decoding (1170) the received signaling data and the received payload data with a first forward error correction code;
   decoding (1180) the signaling data, decoded with the first forward error correction code, with a second forward error correction code,
   wherein the receiving step (1150) receives encoded data frames following said received data frame (1003) in accordance with said signaling data decoded with the second forward error correction code.

9. The method according to claim 8 wherein the step (1180) of decoding the signaling data employs a soft-input decoding.

10. The method according to claim 8 or 9 further comprising a step of decoding the payload data with a third forward error correction code, wherein the third forward error correction code has a higher code rate than the second forward error correction code.

11. A method for transmitting a digital broadcast service, the method comprising the steps of:

   encoding (1110) with a second forward error correction code signaling data of a data frame;
   encoding (1120) with a first forward error correction code the signaling data, encoded with said second forward error correction code, and payload data of said data frame;
   transmitting (1140) the encoded data frame, wherein the signaling data includes information for receiving data frames following said transmitted data frame, the signaling data being encoded with a lower code rate than the payload data.

12. The method according to claim 11 further comprising encoding the payload data with a third forward error correction code, wherein the third forward error correction code has a higher code rate than the second forward error correction code.

13. The method according to any of claims 8 to 12, wherein the second error correction code is a convolutional, LDPC, or a turbo code.

14. The method according to any of claims 8 to 13, wherein the code date of the second error correction code is equal to or less than 1/2.

15. A computer program product comprising a computer-readable medium having a computer-readable program code embodied thereon, the program code being adapted to carry out the method according to any of claims 8 to 14.

EP 2 405 660 A1

# Fig. 1

Fig. 2

# Fig. 3

Modulation frame n

Modulation frame n+1

Modulation frame n+2

310

time

frequency

| 1 | Service 1 |
| 2 | Service 2 |
| 3 | Service 3 |
| 4 | Service 4 |

Unallocated

# Fig. 4

Out-of-band signaling

In-band signaling

Out-of-band signaling

In-band signaling

Modulation frame n

Modulation frame n+1

Preamble

Service of interest

# Fig. 5

| | | | |
|---|---|---|---|
| Base-band block 1 | | Payload | **Uncoded in-band signaling** |
| Base-band block 2 | | Payload | |
| Base-band block 3 | | Payload | |
| Base-band block 4 | | Payload | |

510

520

Base-band
data frame

500

EP 2 405 660 A1

15

# Fig. 6

Uncoded base-band block

Coded base-band block

Payload data + in-band signaling — 610

BCH encoding

BCH Information Bits — 610

BCH Parity Bits — 620

LDPC encoding

LDPC Information Bits — 630

LDPC Parity Bits — 640

# Fig. 7

Uncoded
in-band
signaling
520

710

Extra FEC
Coding

Base-band block 1      Payload      Coded
in-band
signaling

Base-band block 2      Payload

Base-band block 3      Payload

Base-band block 4      Payload

Base-band
data frame   700

# Fig. 8

810 — Uncoded payload data

BCH encoding (optional)

Uncoded base-band block: Payload data

820

830 — Uncoded in-band signaling

Extra FEC coding

840 — Coded in-band signaling

LDPC encoding

850

Coded base-band block: LDPC Information Bits / LDPC Parity Bits

860

# Fig. 9

SNR (dB)

BER (log)

0.5

(1) BER for in-band signaling with no extra FEC code

(2) BER for out-of-band signaling with low code rate

(3) BER for in-band signaling with extra FEC code

# Fig. 10A

modulation frame(s)

Tx — 1040

1st FEC — 1010

2nd FEC — 1020 ← 1001

3rd FEC — 1030 ← 1002

1000A

# Fig. 10B

data frame

2nd FEC — 1070

1st FEC — 1060

3rd FEC — 1080

Rx — 1050 ← 1003

1000B

# Fig. 11A

transmission →
encode in-band signalling data of the data frame with a 2nd FEC code — 1110 →
encode data frame data with a 1st FEC code — 1120 →
map encoded data frame onto modulation frames — 1130 →
transmit modulation frames — 1140

# Fig. 11B

reception →
receive modulation frames(s) — 1150 →
demap encoded data frame — 1160 →
decode data frame data with a 1st FEC code — 1170 →
decode in-band signalling data of the data frame with a 2nd FEC code — 1180

Fig. 12

**EUROPEAN SEARCH REPORT**

Europäisches
Patentamt
European
Patent Office
Office européen
des brevets

Application Number

EP 10 00 6973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 198 547 A2 (NOKIA CORP [FI])<br>23 June 2010 (2010-06-23)<br>* paragraphs [0003] - [0008], [0025] - [0026]; figures 1-10 * | 1-15 | INV.<br>H04N7/64<br>H04N7/24 |
| X | DVB ORGANIZATION:<br>"T2_SSS_011_Robustness_L1L2_signalling_NokiaTeracom.doc"<br>DVB, DIGITAL VIDEO BROADCASTING, C/O EBU - 17A ANCIENNE ROUTE - CH-1218 GRAND SACONNEX, GENEVA - SWITZERLAND,<br>15 September 2007 (2007-09-15),<br>XP017817496<br>* Section 5.7.3 Co-scheduled signalling * | 1-15 | |
| X | DVB ORGANIZATION:<br>"T2_SSS_010_DRAFTbaseline_SSS_section_r001.doc"<br>DVB, DIGITAL VIDEO BROADCASTING, C/O EBU - 17A ANCIENNE ROUTE - CH-1218 GRAND SACONNEX, GENEVA - SWITZERLAND,<br>15 September 2007 (2007-09-15),<br>XP017817495<br>* Section 3.1 Co-scheduled Signalling * | 1-15 | |
| A | DVB ORGANIZATION:<br>"46NokiaPanasonic_L1_M&I046.pdf"<br>16 November 2007 (2007-11-16), DVB,<br>DIGITAL VIDEO BROADCASTING, C/O EBU - 17A ANCIENNE ROUTE - CH-1218 GRAND SACONNEX, GENEVA - SWITZERLAND , XP017817977<br>* the whole document * | 1-15 | |

**TECHNICAL FIELDS SEARCHED (IPC)**

H04N

The present search report has been drawn up for all claims

| Place of search | Date of completion of the search | Examiner |
|---|---|---|
| Munich | 12 October 2010 | Marzal-Abarca, X |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

EP 2 405 660 A1

**ANNEX TO THE EUROPEAN SEARCH REPORT
ON EUROPEAN PATENT APPLICATION NO.**                    EP 10 00 6973

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2010

| Patent document cited in search report | | Publication date | Patent family member(s) | | Publication date |
|---|---|---|---|---|---|
| EP 2198547 | A2 | 23-06-2010 | AU | 2008303219 A1 | 02-04-2009 |
| | | | WO | 2009040739 A2 | 02-04-2009 |
| | | | US | 2009164873 A1 | 25-06-2009 |

EPO FORM P0459

For more details about this annex : see Official Journal of the European Patent Office, No. 12/82

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHU LIN et al.** Error Control Coding. Prentice Hall, 2004